# EUROPÄISCHE PATENTSCHRIFT

(11) **EP 1 840 009 B1**
(45) Veröffentlichungstag und Bekanntmachung des Hinweises auf die Patenterteilung: **22.08.2012**
(21) Anmeldenummer: 07005985.2
(22) Anmeldetag: 23.03.2007
(51) Int. Cl.: B62D 27/02, B62D 25/20, B62D 21/15

(54) **Karosserie für ein Kraftfahrzeug**
Body for a motor vehicle
Carrosserie pour véhicule automobile

(30) Priorität: 24.03.2006 DE 102006013650
(43) Veröffentlichungstag der Anmeldung: 03.10.2007
(73) Patentinhaber: GM Global Technology Operations LLC, Detroit, MI 48265-3000 (US)
(72) Erfinder: Bach, Michael, 65207 Wiesbaden (DE); Butz, Ingo, 67294 Bischheim (DE); Ringel, Franz-Josef, 55129 Mainz (DE)
(74) Vertreter: Daniel, Ulrich W.P.

(56) Entgegenhaltungen:
- EP-A- 0 844 165
- JP-A- 6 211 164
- US-A- 5 388 885
- US-A- 5 820 204

## Beschreibung

Die Erfindung betrifft eine Karosserie für ein Kraftfahrzeug mit einem eine Bodengruppe seitlich begrenzenden Längsträger, mit einem an dem Längsträger befestigten Bodenblech und mit einer sich an dem Längsträger abstützenden, eine Türausnehmung nach hinten begrenzenden Säule.

Eine solche Karosserie ist beispielsweise aus der EP 0 844 165 B1 bekannt. Hierbei ist die als B-Säule ausgebildete Säule auf einen Schweller des Längsträgers aufgesetzt und über ein schräg sich an dem Bodenblech abstützendes Verstärkungsblech mit der Bodengruppe verbunden. Der Schweller stützt bei einem Frontalcrash entstehende Kräfte ab, während das Verstärkungsblech bei einem Seitenaufprall Kräfte von der B-Säule in die Bodengruppe einleitet. Hierdurch wird bei einem Crash die Fahrgastzelle des Kraftfahrzeuges weitgehend intakt gehalten. Nachteilig bei der bekannten Karosserie ist jedoch, dass die Anbindung der B-Säule an die Bodengruppe nur sehr schwer zu fertigen ist. Weiterhin weist die Anbindung der B-Säule an die Bodengruppe sehr große Abmessungen auf, was beispielsweise beim Einsatz von hochfesten Stählen zu hohen Kosten führt.

Ähnliche Karosserien sind aus der gattungsgemäβen 5 820 204 A, der JP 06 211164 A und der US 5 388 885 A bekannt.

Der Erfindung liegt das Problem zugrunde, eine Karosserie der eingangs genannten Art so weiterzubilden, dass sie eine gleichmäßige Deformation der Karosserie im Crashfall gewährleistet und dass sie möglichst kostengünstig herstellbar ist.

Dieses Problem wird erfindungsgemäß gelöst durch eine Kerasserie gemäβ Anspruch 10

Durch diese Gestaltung benötigt die erfindungsgemäße Karosserie mit dem Stützelement nur ein einzelnes Bauteil, welches bei entsprechender Formgebung gleichmäßig und gezielt Deformationskräfte bei einem Crash abbaut. Hierdurch ist die erfindungsgemäße Karosserie konstruktiv besonders einfach aufgebaut und lässt sich kostengünstig fertigen. Weiterhin vermag das Stützelement an dieser Stelle in der erfindungsgemäßen Karosserie ein Tordieren des Schwellers zu verhindern. Daher wird im Crashfall eine gleichmäßige Deformation der Karosserie gewährleistet. Die Größe des Stützelementes kann entsprechend den Abmessungen der angrenzenden Bauteile angepasst werden.

Zur weiteren Erhöhung der Stabilität der erfindungsgemäßen Karosserie im Bereich des Anschlusses der Säule an dem Längsträger trägt es bei, wenn das Stützelement an dem Innenblech und an dem Außenblech des Längsträgers befestigt ist. Das Stützelement erzeugt damit einen Abstützschott und stützt die äußere Struktur des Längsträgers gegen die innere ab und verhindert damit deren Versagen bei einem Crash.

Ein Aufbiegen von Flanschen im Anschluss der Säule an dem Längsträger lässt sich gemäß einer vorteilhaften Weiterbildung der Erfindung einfach vermeiden, wenn das Stützelement seitlich an dem Längsträger befestigt ist. Durch die Anlenkung des Stützelementes sowohl an dem Längsträger als auch an dem Bodenblech und der Säule werden zudem Torsionskräfte zuverlässig abgestützt.

Bei einem Crash des Kraftfahrzeuges lassen sich gemäß einer anderen vorteilhaften Weiterbildung der Erfindung gezielt Deformationskräfte abbauen, wenn das Stützelement in einem mittleren Bereich ein Deformationsglied aufweist und wenn das Deformationsglied in zumindest einer Belastungsrichtung eine geringere Biegesteifheit aufweist als die an das Deformationsglied angrenzenden Bereiche des Stützelementes. Hierdurch wird verhindert, dass das Stützelement bei einem Crash zu einer Überlastung der angrenzenden Bauteile der erfindungsgemäßen Karosserie führt.

Das Deformationsglied gestaltet sich gemäß einer anderen vorteilhaften Weiterbildung der Erfindung konstruktiv besonders einfach, wenn das Deformationsglied eine Sicke aufweist. Durch diese Gestaltung ermöglicht das Deformationsglied einen gezielten Abbau der Deformationskräfte in einer Richtung. In einer anderen Richtung ist das Deformationsglied relativ steif und verhindert ein Versagen der an das Stützelement angrenzenden Bauteile bei einem Crash.

In Längsrichtung weist die erfindungsgemäße Karosserie eine besonders hohe Steifheit auf, wenn die Sicke parallel zu dem Längsträger angeordnet ist.

Eine Störung des Innenraums durch das Stützelement lässt sich erfindungsgemäß einfach vermeiden, da das Stützelement unterhalb des Innenblechs des Längsträgers angeordnet ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: perspektivisch einen Teilbereich einer erfindungsgemäßen Karosserie im Bereich einer Anbindung der B-Säule an eine Bodengruppe,
- Fig. 2: eine Schnittdarstellung durch einen Teilbereich der erfindungsgemäßen Karosserie aus Figur 1 entlang der Linie II - II.

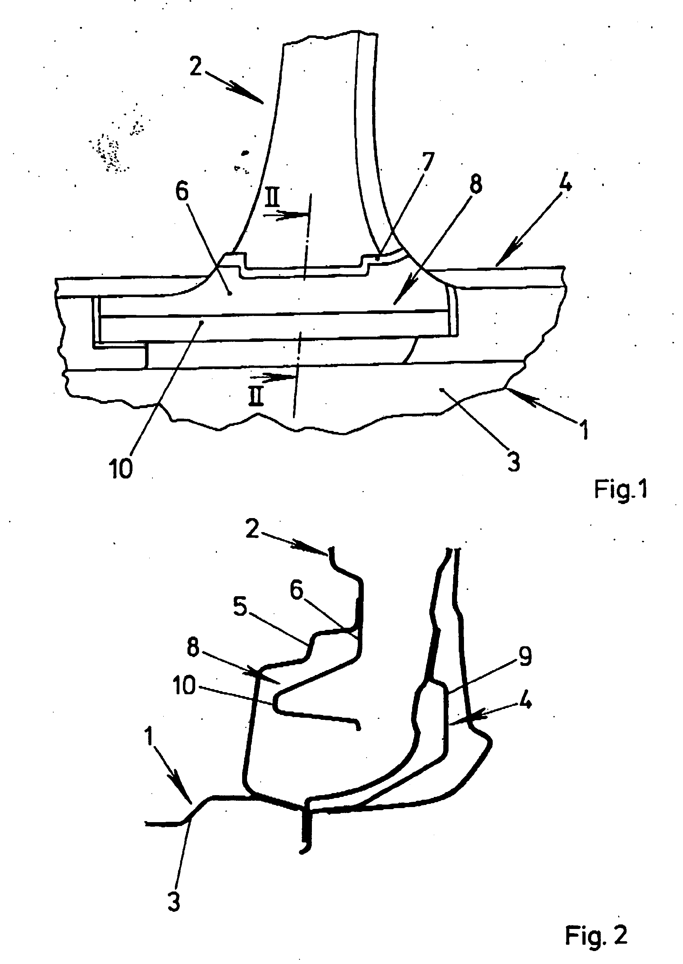

Figur 1 zeigt einen Teilbereich einer Karosserie eines Kraftfahrzeuges mit einer Bodengruppe 1, einer Fahrgastzelle und einer vertikal zu der Bodengruppe 1 angeordneten, als B-Säule ausgebildeten Säule 2. Die Bodengruppe 1 weist ein Bodenblech 3 auf und ist nach außen hin von einem Längsträger 4 begrenzt. Zur Vereinfachung der Zeichnung sind ein den Längsträger 4 nach innen hin begrenzendes Innenblech 5 nur in Figur 2 dargestellt. Die Säule 2 ist mit dem Längsträger 4 verbunden. Ein Stützelement 6 ist an seinem oberen Ende an dem dem Längsträger 4 zugewandten Bereich der Säule 2 befestigt. Hierfür hat das Stützelement 6 einen Flansch 7. Weiterhin stützt sich das Stützelement 6 nach unten hin an dem Bodenblech 3 ab. Die seitlichen Enden des Stützelementes 6 sind an dem Längsträger 4 befestigt. Im mittleren Bereich hat das Stützelement 6 ein Deformationsglied 8. Das Deformationsglied 8 hat eine parallel zu dem Längsträger 4 angeordnete Sicke 10.

Wie Figur 2 in einer Schnittdarstellung durch den Teilbereich der Karosserie aus Figur 1 erkennen lässt, ist das Stützelement 6 unterhalb des Innenblechs 5 des Längsträgers 4 und damit zwischen dem Innenblech und einem Außenblech 9 angeordnet. Die Sicke 10 des Deformationsgliedes 8 ragt dabei in Richtung des Innenblechs 5. In dem senkrecht zur Zeichenebene weisenden Ende ist das Stützelement 6 mit den Bauteilen des Längsträgers 4 verbunden. Die Abstützung des Stützelementes 6 an dem Bodenblech 3 ist zur Vereinfachung der Zeichnung in Figur 2 nicht dargestellt. Das Stützelement 6 versteift den Längsträger 4 bei einer Torsionsbeanspruchung. Damit wird bei einem Crash eine besonders gleichmäßige Belastung der Karosserie erreicht. Das Stützelement 6 baut damit gezielt Deformationskräfte beim Crash ab.

### Bezugszeichenliste

- 1: Bodengruppe
- 2: B-Säule
- 3: Bodenblech
- 4: Längsträger
- 5: Innenblech
- 6: Stützelement
- 7: Flansch
- 8: Deformationsglied
- 9: Außenblech
- 10: Sicke

## Patentansprüche

1. Karosserie für ein Kraftfahrzeug mit einem eine Bodengruppe (1) seitlich begrenzenden Längsträger (4), wobei der Längsträger (4) ein Innenblech (5) und ein Außenblech (9) aufweist, mit einem an dem Längsträger (4) befestigten Bodenblech (3) und mit einer sich an dem Längsträger (4) abstützenden, eine Türausnehmung nach hinten begrenzenden Säule (2), und mit einem Stützelement (6), welches sich nach oben hin an dem dem Längsträger (4) zugewandten Bereich der Säule (2) und nach unten hin an dem Bodenblech (3) abstützt, **dadurch gekennzeichnet, dass** das Stützelement (6) unterhalb des Innenblechs (5) des Längsträgers (4) angeordnet ist.

2. Karosserie nach Anspruch 1, **dadurch gekennzeichnet, dass** das Stützelement (6) an dem Innenblech (5) und an dem Außenblech (9) des Längsträgers (4) befestigt ist.

3. Karosserie nach Anspruch 1 oder 2, **dadurch gekennzeichnet, dass** das Stützelement (6) seitlich an dem Längsträger (4) befestigt ist.

4. Karosserie nach zumindest einem der vorhergehenden Ansprüche, **dadurch gekennzeichnet, dass** das Stützelement (6) in einem mittleren Bereich ein Deformationsglied (8) aufweist und dass das Deformationsglied (8) in zumindest einer Belastungsrichtung eine geringere Biegesteifheit aufweist als die an das Deformationsglied (8) angrenzenden Bereiche des Stützelementes (6).

5. Karosserie nach zumindest einem der vorhergehenden Ansprüche, **dadurch gekennzeichnet, dass** das Deformationsglied (8) eine Sicke (10) aufweist.

6. Karosserie nach zumindest einem der vorhergehenden Ansprüche, **dadurch gekennzeichnet, dass** die Sicke (10) parallel zu dem Längsträger (4) angeordnet ist.

## Claims

1. A body for a motor vehicle, comprising a longitudinal beam (4) laterally delimiting an undercarriage (1), with the longitudinal beam (4) having an inner panel (5) and an outer panel (9), a bottom plate (3) fixed to the longitudinal beam (4) and a pillar (2) supported on the longitudinal beam (4) and rearwardly delimiting a door recess, and a support element (6) which is supported upwardly on the region of the pillar (2) facing the longitudinal beam (4) and downwardly on the bottom plate (3), **characterized in that** the support element (6) is arranged beneath the inner panel (5) of the longitudinal beam (4).

2. A body according to claim 1, **characterized in that** the support element (6) is fixed to the inner panel (5) and the outer panel (9) of the longitudinal beam (4).

3. A body according to claim 1 or 2, **characterized in that** the support element (6) is laterally fixed to the longitudinal beam (4).

4. A body according to at least one of the preceding claims, **characterized in that** the support element (6) comprises a deformation member (8) in a middle region, and that the deformation member (8) has a lower flexural stiffness in at least one loading direction than the regions of the support element (6) adjacent to the deformation member (8).

5. A body according to at least one of the preceding claims, **characterized in that** the deformation member (8) comprises a body swage (10).

6. A body according to at least one of the preceding claims, **characterized in that** the body swage (10) is arranged parallel to the longitudinal beam (4).

## Revendications

1. Carrosserie pour un véhicule à moteur avec un longeron (4) délimitant latéralement un sous-ensemble de plancher (1), dans lequel le longeron (4) présente une tôle intérieure (5) et une tôle extérieure (9), avec une tôle de plancher (3) fixée au longeron (4) et avec un montant (2) s'appuyant sur le longeron (4) et délimitant une ouverture de porte vers l'arrière, et avec un élément d'appui (6) qui s'appuie vers le haut sur la partie du montant (2) tournée vers le longeron (4) et vers l'arrière sur la tôle de plancher (3), **caractérisée en ce que** l'élément d'appui (6) est disposé en dessous de la tôle intérieure (5) du longeron (4).

2. Carrosserie selon la revendication 1, **caractérisée en ce que** l'élément d'appui (6) est fixé sur la tôle intérieure (5) et sur la tôle extérieure (9) du longeron (4).

3. Carrosserie selon la revendication 1 ou 2, **caractérisée en ce que** l'élément d'appui (6) est fixé latéralement sur le longeron (4).

4. Carrosserie selon l'une au moins des revendications précédentes, **caractérisée en ce que** l'élément d'appui (6) présente dans une partie centrale un élément déformable (8) et **en ce que** l'élément déformable (8) présente une moins grande rigidité en flexion dans au moins un sens de contrainte que les parties de l'élément d'appui (6) contiguës à l'élément déformable (8).

5. Carrosserie selon l'une au moins des revendications précédentes, **caractérisée en ce que** l'élément déformable (8) présente une moulure (10).

6. Carrosserie selon l'une au moins des revendications précédentes, **caractérisée en ce que** la moulure (10) est disposée parallèlement au longeron (4).
